# EUROPEAN PATENT APPLICATION

(11) **EP 2 302 136 A1**
(43) Date of publication of application: **30.03.2011**
(21) Application number: 10168223.5
(22) Date of filing: 02.07.2010
(51) Int. Cl.: E02D 27/38

(54) **Foundation for wind turbine**

(30) Priority: 08.07.2009 US 499406
(71) Applicant: General Electric Company, Schenectady, NY 12345 (US)
(72) Inventor: Willey, Lawrence, Simpsonville, SC 29680 (US); Zheng, Danian, Simpsonville, SC 29681 (US)
(74) Representative: Bedford, Grant Richard

(57) **Abstract**

A modular surface foundation for wind turbine space frame towers (30), an apparatus to form panels of housing members (44) of modular surface foundation, and method of forming the modular surface foundation for wind turbine space frame tower (30)s is provided. The modular surface foundation comprises a plurality of footing members, and a housing member (44) disposed on each of the footing members, the housing members (44) extending from the footing members and attaching to one or more structural members forming a portion of a wind turbine tower (30), wherein the housing member (44) provides support and increased height for the space frame tower (30) and includes an interior space.

## Description

The present disclosure is directed generally to a modular surface foundation for wind turbine space frame towers, an apparatus to form a plurality of panels of the housing member of the modular surface foundation, and a method of forming the modular surface foundation for wind turbine space frame towers.

Recently, wind turbines have received increased attention as environmentally safe and relatively inexpensive alternative energy sources. With this growing interest, considerable efforts have been made to develop wind turbines that are reliable, efficient, and cost effective to install.

Generally, a wind turbine includes a rotor having multiple blades. The rotor is mounted via a hub, main shaft and bearing to a housing or nacelle, which is positioned on top of a truss or tubular tower. Utility grade wind turbines (i.e., wind turbines designed to provide electrical power to a utility grid) can have large rotors (e.g., blade lengths of 30 meters or more). In addition, the wind turbines are typically mounted on towers that are at least 60 meters in height. Typically, a wind turbine tower is constructed from a single steel tube configuration or a space frame configuration. Both types of towers require a proper foundation to support the tower and turbine. In general, the foundation design is based on the weight and configuration of the proposed turbine, the expected maximum wind speeds as well as turbine load, and the soil characteristics of the site. Typical foundation approaches for space frame or lattice towers include a thick reinforced concrete mat foundation, a reinforced concrete monoplie, a single drilled shaft foundation, or micropile-supported footings at each foot of the space frame tower.

As power requirements increase, the size of wind turbine rotor blades increase which causes an increase in the overall size of the wind turbine, resulting in further increases in tower bottom load which also increases the foundation requirements. As a result of the power increases, foundations must be made larger, heavier, and buried deeper in the ground to support the massive wind turbine structures and loads. The current foundation approaches for space frame towers suffer from various obvious drawbacks. Typically, special crews are needed to excavate and pour the massive foundations, and soil characteristics must be taken into consideration, which includes adequate subsurface investigation such as cone penetration tests. Although material requirements for the foundations for wind turbine space frame towers are substantially less than that of traditional single steel tube towers, the amount of concrete, rebar and other reinforcements is still costly. Furthermore, because of the design of traditional wind turbine space frame towers, additional structures must be built on-site to house any necessary down tower equipment or components, because inadequate storage exists in traditional wind turbine space frame towers.

What is needed is a wind turbine space frame tower foundation that does not require major excavation or special crews to install. What is also needed is a foundation for wind turbine space frame towers that does not require a large amount of material. What is also needed is a wind turbine space frame tower foundation that also contributes to tower height to reduce the cost of materials used in building a wind turbine tower. An additional need includes a wind turbine space frame tower foundation that allows for storage of down tower equipment, maintenance supplies, or components within the foundation.

One aspect of the present disclosure includes a modular surface foundation for wind turbine space frame towers comprising a plurality of footing members, and a housing member disposed on the footing members. The housing member extends from the footing member and attaches to one or more structural members forming a portion of a wind turbine tower. The housing member also provides support and increased height for the space frame tower and includes an interior space. The footing members may comprise a concrete footing disposed in a shallow trench, wherein the trench is substantially shaped like the concrete footing. A possible embodiment may comprise a carbon fiber composite, a reinforced carbon fiber composite, a glass fiber composite, a reinforced glass fiber composite, concrete, reinforced concrete, a metal, or any combination thereof. The housing member may comprise a concrete structure wherein the concrete structure is further supported by rebar and compressed by post-tensioning members. The concrete structure may include a plurality of panels joined together to form the housing member. The plurality of panels may further comprise a series of vertical chambers for receiving vertical post-tensioning members. The plurality of panels may further comprise a series of horizontal chambers for receiving horizontal post-tensioning members.

The modular surface comprising the plurality of panels may further include a top portion disposed on and mechanically connected to a bottom portion, and wherein the bottom portion is disposed on and mechanically connected to the footing. Optionally, the top and bottom portion may include a series of vertical members for receiving vertical post-tensioning members, and a series of horizontal chambers for receiving horizontal post-tensioning members. The modular surface foundation may be comprised of a center-to-center diameter of approximately 1.0 to approximately 1.5 times the diameter of the modular surface foundation element. The height of the modular surface element may be approximately 1.25 to approximately 1.75 times the diameter of the modular surface element. The housing member may be conical shaped, frusto-conical shaped, triangular pyramid shaped, square pyramid shaped, cylindrical shaped, cube shaped, pentagonal prism shaped, hexagonal prism shaped, heptagonal prism shaped, octagonal prism shaped, nonagonal prism shaped, or decagonal prism shaped. The interior space of the modular surface foundation may be configured to hold down tower equipment for the wind turbine.

Another aspect of the present disclosure includes a method of forming a modular surface foundation for wind turbine space frame towers comprising fabricating a plurality of housing members having a series of post-tensioning cables, forming a plurality of shallow trenches to hold footing members, fabricating a plurality of footing members and placing the footing members in the shallow trenches, applying the plurality of housing members to the plurality of footing members and securing the housing members to the footing members, applying tension to housing members using the post-tensioning cables wherein the housing member provides support and increased height for the space frame tower and includes an interior space, and attaching structural members of wind turbine space frame tower to housing members. The method may further comprise a housing member wherein one or more of a door, a thermal exchange duct, a vent, steps, and any combination thereof. The footing member may be pre-fabricated off site. The housing member may hold down tower equipment.

Another aspect of the present disclosure provides an apparatus having a body closable to form a plurality of panels of a housing member of a modular surface foundation, wherein the body may further comprise a top portion containing an aperture for receiving concrete and a bottom portion containing tubes running horizontally and vertically throughout, wherein the formed panels are joined together to form the housing member, wherein the housing member is disposed on a footing member and attached to one or more structural members forming a portion of a wind turbine tower, and wherein the housing member provides support and increased space for a space frame tower and includes an interior space. The tubes of the bottom portion may be removable from the formed panels of the housing member after the concrete has cured. The bottom portion of the body may further include rebar

One advantage of various aspects of the present disclosure is that the modular surface foundation provides reduced excavation costs and requires less material to install compared to current space frame tower foundations.

Another advantage of various aspects of the present disclosure is that the modular surface foundation provides storage for down tower equipment.

Yet another advantage of various aspects of the present disclosure is that the modular surface foundation provides additional height to the space frame tower.

Various features and advantages of the present invention will be apparent from the following more detailed description of the preferred embodiments, taken in conjunction with the accompanying drawings which illustrate, by way of example, the principles of the invention, and in which:
FIG. 1 is a side view of a wind turbine according to an embodiment of the present disclosure.
FIG. 2 is a perspective view of a portion of the modular surface foundation element according to an embodiment of the present disclosure.
FIG. 3 is a partial perspective view of the modular surface foundation element showing staggered joints of the housing member according to an embodiment of the present disclosure.
FIG. 4 is a front sectional view of the footing member according to an embodiment of the present disclosure.
FIG. 5 is a sectional view of the modular surface foundation element of FIG. 2 taken in direction 5-5 showing the interior surface according to an embodiment of the present disclosure.
FIG. 6 is a perspective view of the mold used to make a portion of the housing member of the modular surface foundation element according to an embodiment of the present disclosure.
FIG.7 is a perspective transparent view of a portion of the housing member of the modular surface foundation element according to an embodiment of the present disclosure.
FIG. 8 is a perspective view of the internal surface of a portion of the housing member of the modular surface foundation element according to an embodiment of the present disclosure.
FIG. 9 is a sectional view of the internal surface of a portion of FIG. 8 taken in direction 9-9 showing the interior surface of the modular surface foundation element according to an embodiment of the present disclosure.
FIG. 10 is a sectional view of the modular surface foundation of FIG.1 taken in the 10-10 direction showing the dimensions of the modular surface foundation and modular surface foundation elements.

Wherever possible, the same reference numbers will be used throughout the drawings to refer to the same or like parts.

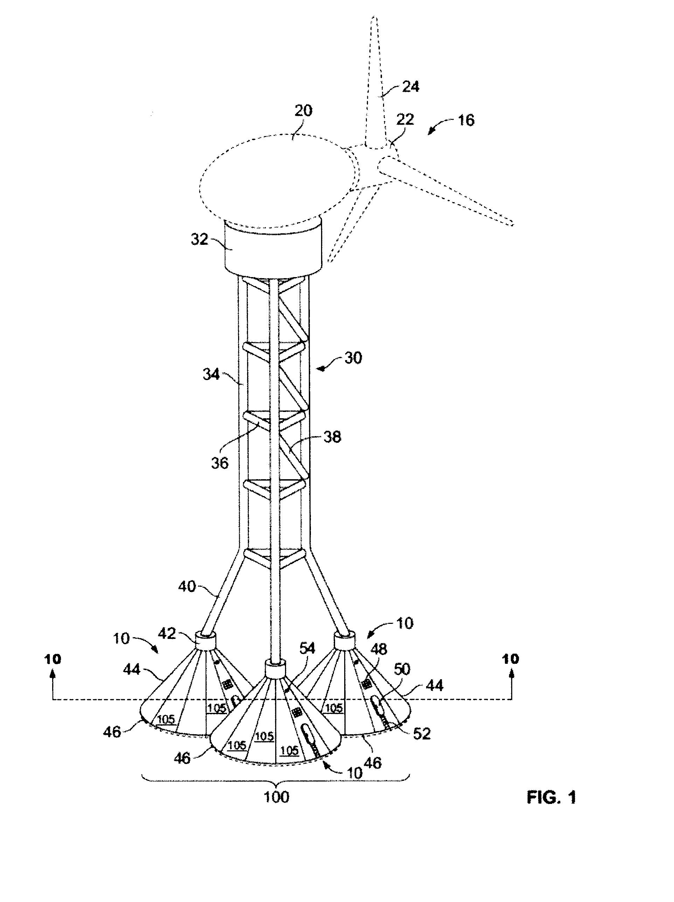

As shown in FIG. 1, a wind turbine 16 generally includes a nacelle 20 housing a generator (not shown). Nacelle 20 is mounted atop a tower transition piece 32 with a flange (not shown) on top of a space frame tower 30. The height of tower 30 is selected based upon factors and conditions known in the art, and may extend to heights of 60 meters or more. The wind turbine 16 may be installed on any terrain providing access to areas having desirable wind conditions. The terrain may vary greatly and may include, but is not limited to, mountainous terrain or off-shore locations. Wind turbine 16 also comprises a rotor 22 that includes one or more rotor blades 24 attached to a rotating hub. Although wind turbine 16 shown in FIG. 1 includes three rotor blades 24, there are no specific limits on the number of rotor blades 24 required by the present invention. Space frame tower 30 includes a plurality of vertical tower support members 34, a plurality of horizontal tower support members 36, and a plurality of bracing tower support members 38 integrally connected. Space frame tower 30 further includes a plurality of structural members 40 that support and connect space frame tower 30 to housing members 44. As shown in FIG. 1, space frame tower 30 has a tripole construction, having three structural members 40. In alternative embodiments, space frame tower 30 may be constructed using more than three structural members 40 to form tower 30.

Modular surface foundation 100 comprises a plurality of modular surface foundation elements 10. Each modular surface foundation element 10 further comprises a footing member 46 and a housing member 44, wherein housing member 44 is disposed on each footing member 46, and wherein housing member 44 extends from footing member 46 and attaches to one or more structural members 40 forming a portion of wind turbine tower 30. As shown in FIG. 1, modular surface foundation 100 comprises three modular surface foundation elements 10, each modular surface foundation element 10 further comprises housing member 44 extending from footing member 46 that attaches to each structural member 40 of space frame tower 30. In alternative embodiments, modular surface foundation 100 may have more than three modular surface foundation elements 10, and each modular surface foundation element 10 further comprises housing member 44 and footing member 46. In another alternative embodiment, modular surface foundation 100 has a smaller or greater number of modular surface foundation elements 10 than the number of structural members 40 that form space frame tower 30.

As shown in FIG. 1, housing member 44 of each modular surface foundation element 10 includes a plurality of panels 105 joined together to form housing member 44. In another embodiment, not shown in the figures, housing member 44 can be a single monolithic integrally formed concrete structure further supported by rebar and compressed by post-tensioning members.

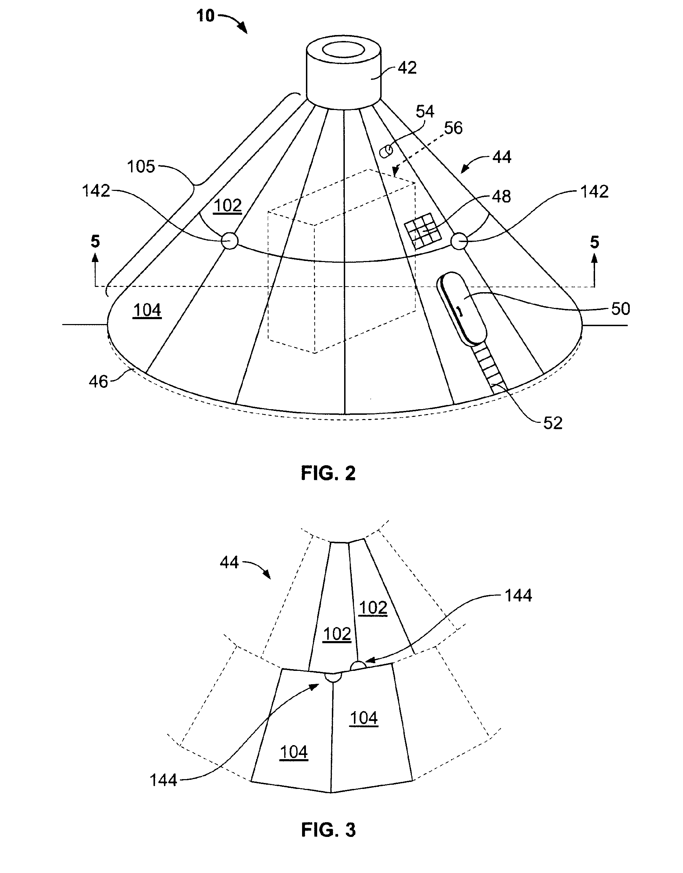

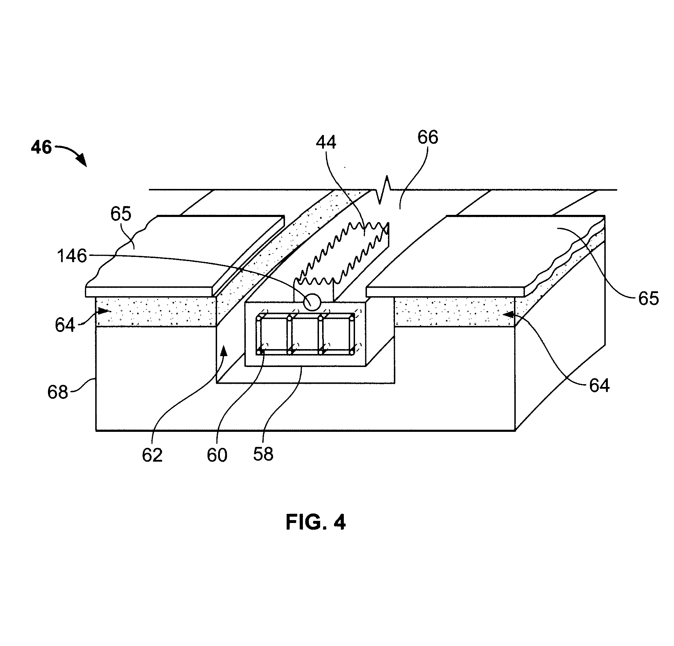

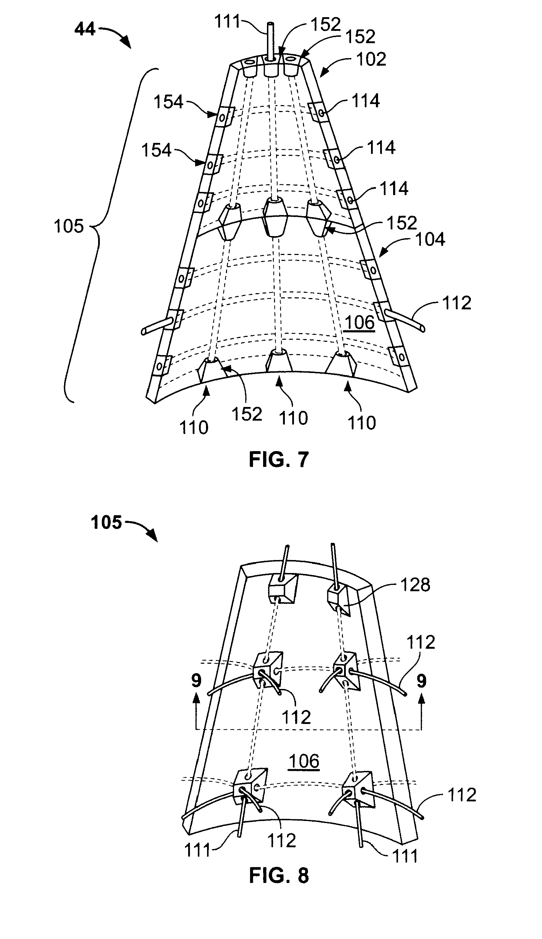

FIG. 2 shows a single modular surface foundation element 10 of the modular surface foundation 100 of the present embodiment. Housing member 44 of modular surface foundation element 10 is comprised of a plurality of panels 105 joined together to form housing member 44. Panels 105 can further include a plurality of top panel sections 102 and a plurality of bottom panel sections 104. Top panel sections 102 are formed to rest on and attach to each respective bottom panel section 104 by vertical post-tensioning members 111 (see FIG. 7) and other fastening mechanisms (not shown). As shown in FIG. 2, top panel section 102 and bottom panel section 104 are connected and have aligned joints 142. In an alternative embodiment, as shown in FIG. 3, top panel section 102 and bottom panel section 104 are connected by unaligned or staggered joints 144. Staggered joints 144 are offset circumferentially, such that staggered joints 144 are situated in the middle of top panel section 102 and middle of bottom panel section 104, to provide adequate support to form housing member 44. As shown in FIG. 2, top panel section 102 of housing member 44 is further attached to a connecting member 42, wherein connecting member 42 is connected to the structural member 40 of tower 30. Connecting member 42 contains fasteners (not shown) to secure and attach the housing member 44 of modular surface foundation element 10 to structural member 40 of tower 30 (see FIG. 1). Bottom panel section 104 of housing member 44 is further connected to footing member 46 by a fastening mechanism 146 (see FIG. 4). Suitable fastening mechanisms include, but are not limited to, bolts, nuts, screws, pins, gussets, grouting, and other fastening mechanisms well known in the art. Fastening mechanism 146 can also be integrally formed within bottom panel section 104 of housing member 44 or integrally formed within the footing member 46. In the present embodiment, housing member 44 further comprises a vent 48 for airflow, a door 50 to access area inside housing member 44, stairs 52 to reach door 50, and a thermal exchange duct 54. In another embodiment, door 50 may include a vent for airflow to supplement or replace vent 48. As shown in FIG. 2, down tower equipment 56 is located inside the housing member 44. Examples of typical down tower equipment 56, are, but not limited to, turbine control panels, wires, cables, control structures, spare parts, and transformers.

As shown in FIG. 2, housing member 44 is frusto-conical shaped. However, any conical shaped, triangular pyramid shaped, square pyramid shaped, cylindrical shaped, cube shaped, or may sided prism, such as pentagonal prism shaped, hexagonal prism shaped, heptagonal prism shaped, octagonal prism shaped, nonagonal prism shaped, or decagonal prism shaped may be possible as long as the desired structural and support properties of modular surface foundation element 10 of modular surface foundation 100 are obtained. In the present embodiment, footing member 46 is annularly shaped. In an alternative embodiment, footing member 46 can be substantially shaped like bottom of housing member 44.

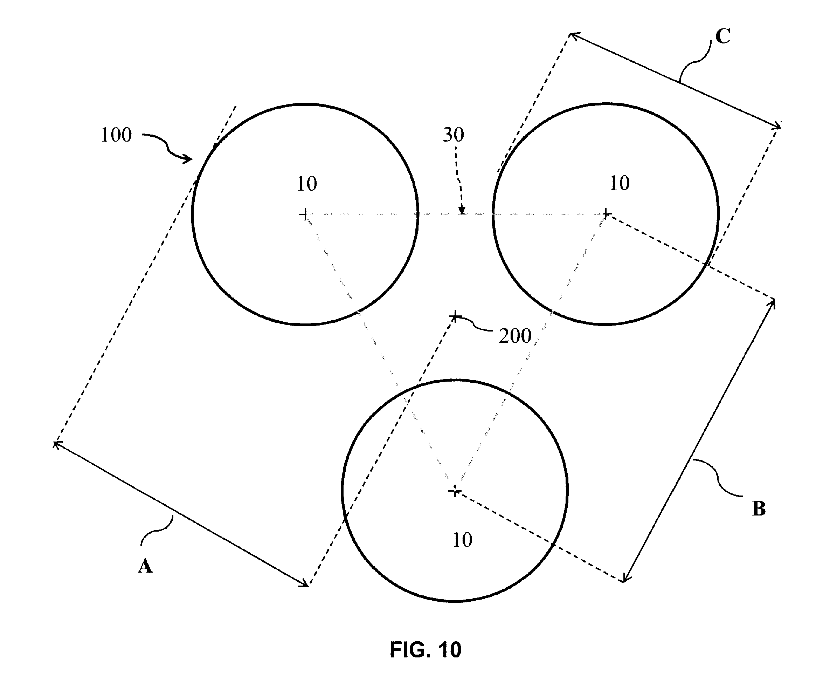

As shown in FIG. 10, modular surface foundation 100 includes three modular surface foundation elements 10. The overall diameter of modular surface foundation 100 is approximately 9.8 meters to approximately 48.8 meters, which allows for space frame towers 30 supporting wind turbines 16 rated from 800 kilowatt (kW) to 10 megawatt (MW) respectively. The outermost extent prescribed by the overall diameter of modular surface foundation 100 includes the outermost edge of concrete footing 58 of footing member 46, which is also the outer edge of modular surface foundation element 10 bearing on undisturbed earth. The diameter range for modular surface foundation 100 is approximately 9.8 meters to approximately 48.8 meters and is specific for modular surface foundation element 10 having center-to-center dimensions (B) equal to 1.25 times the diameter of modular surface foundation element 10. The center-to-center dimension (1_{ctc}) is measured from the center of one modular surface foundation element 10 to the center of another adjacent modular surface foundation element 10, shown in FIG. 10 as dimension (B). In another embodiment, the center-to-center dimension (B) may range from approximately 1.0 to approximately 1.5 times or more of the diameter of the modular surface foundation element 10, resulting in a potential for additional overall diameter values for modular surface foundation 100.

Table I provides an exemplary embodiment of the ratio of the center-to-center dimension (B) relative to the diameter of modular surface foundation element MSFE) 10, having three, four, five, or six modular surface foundation elements 10.

| **Table I: Ratio of center-to-center dimension (B)** | | | |
|---|---|---|---|
| | l_{ctc} = number (provided below) * diameter_{MSFE} | | |
| Number of MSFEs | Average | Min | Max |
| 3 | 1.25 | 1 | 1.5 |
| 4 | 1.12 | 1 | 1.25 |
| 5 | 1.07 | 1 | 1.15 |
| 6 | 1.04 | 1 | 1.1 |

Although Table I provides an exemplary embodiment of the ratios of the center-to-center dimension (B), it is not limiting. The range of ratios can be different for different tower design parameters such as hub height, rotor thrust, overall turbine and foundation weight and allowable soil bearing pressure. The ratio values of center-to-center dimension (l_{ctc}) relative to the diameter of the modular surface foundation element can be as high as 2.0 for three modular surface elements 10 and as high as 1.18 for six modular surface foundation elements 10.

In the present embodiment, equilateral triangular spacing exists between each modular surface foundation element 10. The equilateral triangular spacing varies depending on the size of wind turbine 16 and required space frame tower 30 height. The equilateral triangular spacing is calculated from the center of each modular surface foundation element 10, such that, if a line were drawn between each center of each modular surface foundation element 10 to an adjacent modular surface foundation element 10, an equilateral triangle would be formed (see FIG. 10). In the present embodiment, dead load center 200 of modular surface foundation 100 has no side loads applied and is directly in the center of the equilateral triangle formed by modular surface foundation elements 10. Longest moment arm (lₘₐₓ), dimension (A), of the present embodiment which is resistant to overturning is measured from dead load center 200 of modular surface foundation 100 to the outermost edge of concrete footing 58 of modular surface foundation element 10. The shortest moment arm (lₘᵢₙ), dimension (C), of the present invention which is resistant to overturning is equal to the diameter of the concrete footing 58 of modular surface foundation element 10. In the present embodiment, modular surface foundation 100 has an average effective diameter approximately 8.3 meters to approximately 41.6 meters. The average effective diameter of modular surface foundation 100 is equal to the average of the diameters for the minimum (lₘᵢₙ) (dimension (C)) and maximum (lₘₐₓ) (dimension (A)) moment arms defined from dead center 200 of the modular surface foundation 10 to the extreme edge of the foundation (i.e. outermost edge of the concrete footing 58) for space frame tower 30 and modular surface foundation 100 system to resist overturning with respect to opposing the direction of the oncoming wind (as viewed from the side). The average effective diameter of modular surface foundation 100 decreases as the number of modular surface foundation elements increases. As the physical limit to the number of modular surface foundation elements 10 is approached shortest moment arm (lₘᵢₙ) and longest moment arm (lₘₐₓ) will theoretically approach the same value.

The diameter of each modular surface foundation element 10 includes the outer diameter of each concrete footing 58 of each corresponding footing member 46. A suitable diameter of modular surface foundation element 10 may be approximately 4 meters to approximately 20 meters. Diameter of modular surface foundation element 10 allows for tower heights of approximately 60 meters to approximately 150 meters and will easily support an 800 kW to 10 MW wind turbine. Larger or smaller diameters of modular surface foundation 10 are possible and depend on the size of the wind turbine, the required tower height, and the allowable soil bearing pressure.

In the present embodiment, each housing member 44 has a height of approximately 6 meters to approximately 30 meters. The following formula is used to calculate the height of modular surface foundation element 10, h_{msfe} = 1.5 x d_{msfe,} wherein h_{msfe} is the height of modular surface foundation element 10 and d_{msfe} is the diameter of modular surface foundation element 10. In an alternative embodiment, the factor of 1.5 in the above formula can be modified in the range of approximately 1.25 to approximately 1.75 to calculate the height of modular surface foundation element 10. The height of modular surface foundation element 10 is independent from the number of modular surface foundation elements 10. The dimensions of footing member 46 and housing member 44 allow for an interior volume 140 of at least approximately 15 cubic meters per modular surface foundation element 10 for an 800 kW rated wind turbine through over 2,000 cubic meters per modular surface foundation element 10 for a 10 MW wind turbine. Interior volumes 140 are approximately 45 cubic meters to approximately 6,000 cubic meters total for the overall modular surface foundation 100 (i.e., per wind turbine) and provide space otherwise not provided by conventional foundations for storage within housing member 44 or to house down tower equipment 56.

FIG. 4 shows a front sectional view of footing member 46. Footing member 46 further comprises a concrete footing 58 disposed in a shallow trench 62. Trench 62 is substantially shaped like concrete footing 58. A suitable depth of trench 62 is approximately less than 1 meter in depth and approximately less than 1 meter in width, but greater depths and widths of trench 62 are possible. Footing member 46 further includes a floating slab of concrete 65 or gravel 64, both or one of which is disposed on the ground 68 inside and/or outside of footing member 46. Floating slab of concrete 65 and/or gravel 64 found inside modular surface foundation element 10 provides a surface for receiving down tower equipment 56. Floating slab of concrete 65 or gravel 64 found outside modular surface foundation element 10 provides a surface for parking vehicles and other equipment near wind turbine space frame tower 30. Floating slab of concrete 65 is understood in the art to mean that the wearing surface of the floating concrete slab 65 is not relied on for structural strength in the structure, and that floating slab of concrete 65 is free from restraint by other concrete features that can be load-bearing. In the present embodiment, floating slab of concrete 65 is located on gravel 64, which permits water movement and drainage under floating concrete slab 65. Floating slab of concrete 65 "floats" laterally within the housing member 44 but is supported vertically at top surface 66 of concrete footing 58 which is the interface of footing member 46 with the housing member 44. Concrete footing 58 of footing member 46 is further reinforced by rebar 60. Concrete footing 58 is poured on site or pre-fabricated in a facility and assembled on-site.

In the present embodiment, housing member 44 is substantially centered relative to the width of concrete footing 58. Typically, the width of concrete footing 58 is a function of the thickness of housing member 44. In the present embodiment, the width of the concrete footing 58 is greater than or equal to 2.5 times the thickness of housing member 44. In an alternative embodiment, width of concrete footing 58 can be considerably wider to provide suitable bearing capacity, which is dependent on local soil bearing pressure capability. The depth of concrete footing 58 is a function of the thickness of the housing member 44 or a function of the width of the concrete footing 58, which ever is greater. Generally, the depth of concrete footing 58 is greater than or equal to 1.25 times the thickness of housing member 44 or greater than or equal to 0.5 times the width of concrete footing 58, whichever is greater. A suitable diameter of concrete footing 58 is approximately 4 meters to approximately 30 meters, and more specifically approximately 4.3 meters to approximately 20.7 meters. Top surface 66 of concrete footing 58 of footing member 46 receives housing member 44. Footing member 46 further includes a fastener 146 to connect and secure housing member 44 to footing member 46.

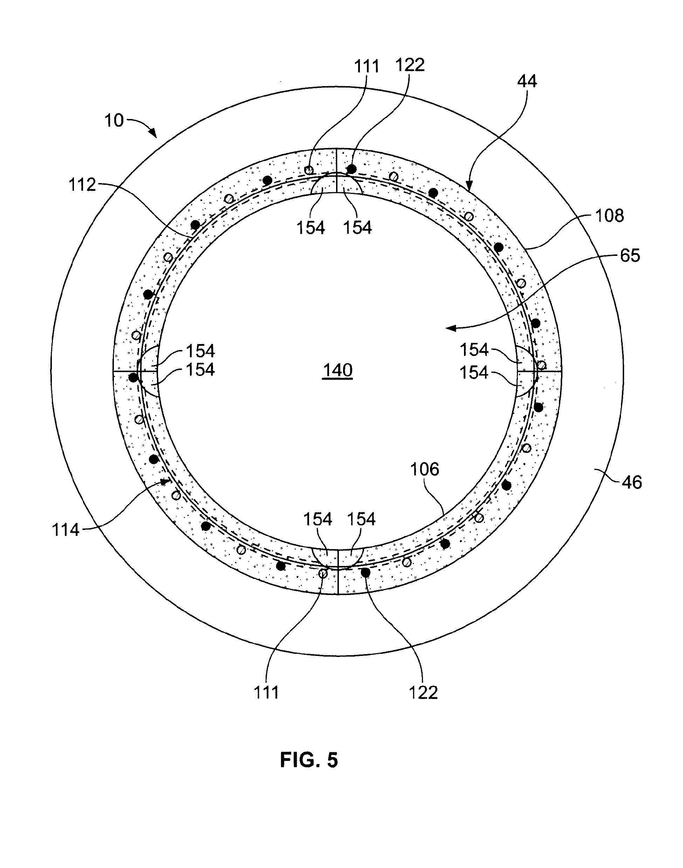

FIG. 5 is a sectional view of the modular surface foundation 10 of FIG. 2 taken in direction 5-5 showing the interior space or volume 140 of housing member 44. Interior space 140 may have a floating slab of concrete 65 or gravel 64 (not shown) to provide a place for down tower equipment (not shown) storage. As shown in FIG. 5, interior space 140 is located inside of housing member 44 proximate to interior wall 106 of housing member 44.

Modular surface foundation element 10 can be made from any material and combination of materials that provides the desired structural, weight, and space requirements to support a space frame tower. Modular surface foundation element 10 can be made from materials such as, but not limited to, carbon fiber composites, reinforced carbon fiber composites, glass fiber composites, reinforced glass fiber composites, concrete, reinforced concrete, steel, and combinations thereof. Housing member 44 of modular surface foundation element 10 can be made from materials, such as, but not limited to, carbon fiber composites, reinforced carbon fiber composite, glass fiber composites, reinforced glass fiber composites, concrete, reinforced concrete, metals, such as steel, and combinations thereof. In the present embodiment, modular surface foundation element 10 is made from a combination of concrete, reinforced concrete, and metals, and housing member 44 is made from a combination of concrete, reinforced concrete, and metals.

Housing member 44 is made at an off-site location and transported to the part fabrication site of modular surface foundation element 10. Alternatively, housing member 44 can be made at the tower erection site. In one embodiment, housing member 44 can be a single monolithic concrete structure. In another embodiment, housing member 44 can be fabricated by joining a two monolithic concrete pieces, a top piece and a bottom piece (not shown) together. Alternatively, housing member 44 can be fabricated using a plurality of panels 105 joined together to form housing member 44 (See FIG. 1). In yet another embodiment, housing member 44 can be fabricated from a plurality of panels 105 having a top panel section 102 and a bottom panel section 104 that are joined together to form housing member 44 (See FIGS. 2, 3 and 6).

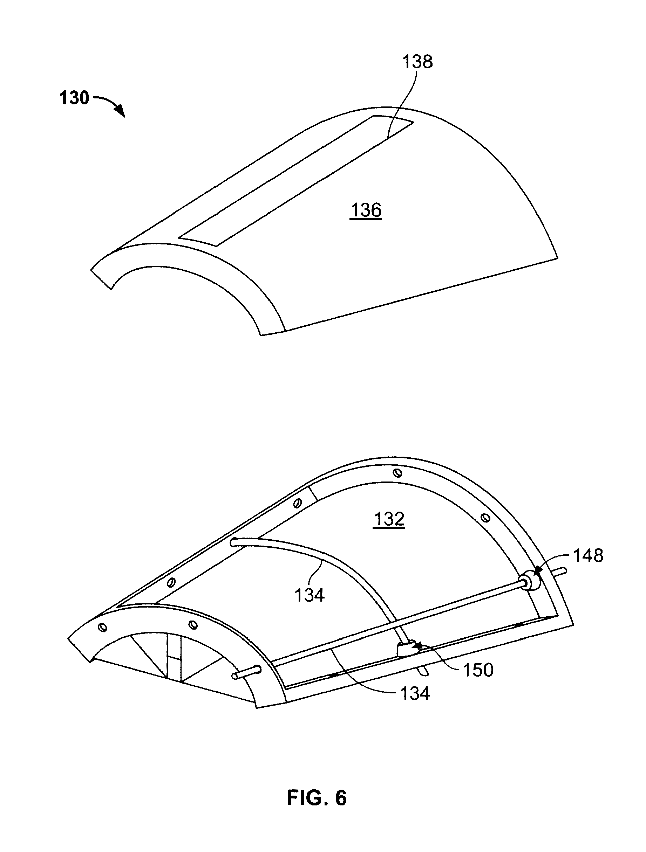

FIG. 6 shows a perspective view of an apparatus or mold 130 having a body closable to form a plurality of panels 105 of housing member 44 of modular surface foundation 10. Housing member 44 can be fabricated using any number of pieces and mold combinations to achieve the desired structure. Mold 130 for fabricating panels 105 and/or top panel sections 102 and bottom panel sections 104, of housing member 44 comprises two pieces, a top mold 136 and a bottom mold 132. Top mold 136 further comprises an opening 138 to pour concrete into mold 130. Opening 138 can also be used to vibrate the concrete to provide adequate dispersion of concrete in mold 130. Alternatively, a shaking table can be used to vibrate the concrete to provide adequate dispersion of concrete in mold 130. In one embodiment, bottom portion 132 comprises a plurality of vertical inserts 148 and a plurality of horizontal inserts 150. Vertical inserts 148 are used to form pre-fabricated vertical recesses 152 used to adjust vertical tensioning cables 111, as shown in FIG. 7. Horizontal inserts 150 are used to form pre-fabricated horizontal recesses 154 used to adjust horizontal tensioning cables 112, as shown in FIG. 7. Inserts 148, 150 can be made from any plastic, steel, or other suitable material that will withstand concrete setting. Inserts 148 can be partially or fully removed from the concrete after it has been cured to provide pre-fabricated recesses 152, 154. Bottom portion 132 of mold 130 further comprises a plurality of tubes 134 placed vertically and horizontally along the length of bottom portion 132. Tubes 134 can run through inserts 148, 150 (as shown) or tubes 134 can attach to inserts 148, 150. In an alternative embodiment, anchor stubs 128 are integrally formed in panels 105 using mold 130. Suitable material for tubes 134 includes, but is not limited to, plastic, steel, or other materials that can withstand concrete setting. Tubes 134 stay in formed panel 105 after the concrete has cured. In an alternative embodiment, tubes 134 can be removed from panel 105 after concrete has cured. The hollow portions in panel 105 of housing member 44 from tubes 134 provide horizontal through-tubes 114 and vertical through-tubes 110 for the horizontal and vertical tensioning cables or tendons (post-tensioning members) 111, 112. Mold 130 typically also contains rebar (not shown) running vertically and/or horizontally inside bottom portion 132. The thickness of the cured concrete of housing member 44 is approximately 100 millimeters (approximately 4 inches) to about approximately 500 millimeters (approximately 20 inches), more specifically, approximately 150 millimeters (approximately 6 inches) to approximately 300 millimeters (approximately 12 inches), or, even more specifically, 200 millimeters (approximately 8 inches) to approximately 250 millimeters (approximately 10 inches), and all subranges therebetween. The thickness of cured concrete of housing member 44 is a function of structural loading requirements and varies according to the size of wind turbine.

FIG. 7 shows a portion of the interior 106 of housing member 44. Horizontal through-tubes 114 run hoop-wise through housing member 44. Vertical through-tubes 110 run vertically through housing member 44. FIG. 7 depicts a single horizontal tensioning cable 112 shown running through horizontal through-tube 114 and a single vertical tensioning cable 111 shown running through vertical through-tube 110; however, a plurality of horizontal tensioning cables 112 and a plurality of vertical tensioning cables 111 are used to provide adequate tension to the assembled housing member 44. Housing member 44 further includes a fastener 146 (See FIG. 4) to secure housing member 44 to top surface 66 of concrete footing member 46. In the present embodiment, tensioning cables 111, 112 are threaded through vertical through-tubes 110, and horizontal through-tubes 114, to join the panels 105 of housing member 44. Vertical tensioning cables 111 provide tension height-wise or vertically to panels 105. Vertical tensioning cables 111 are tightened at the top edge of panel 105 in a series of vertical pre-fabricated recesses 152. Alternatively, when panels 105 contain a top section 102 and a bottom section 104, vertical tensioning cables 111 join and provide tension height-wise or vertically to top section 102 and bottom section 104 of panels 105. As shown in FIG. 7, a series of pre-fabricated vertical recesses 152 are provided at the top and bottom of top section 102 and bottom section 104 of panel 105 to allow vertical tensioning cables 111 to be adequately adjusted to provide the required tension. Horizontal tensioning cables 112 join and provide tension to plurality of panels 105 of housing member 44, in a hoop-wise direction. As shown in FIG.7, a series of pre-fabricated horizontal recesses 154 are provided at the sides of panels 105 to allow horizontal tensioning cables 112 to be adequately adjusted to provide the required tension. Alternatively, when housing member 44 contains plurality of top sections 102 and plurality of bottom sections 104, horizontal tensioning cables 112 join and provide tension hoop-wise to adjacent top sections 102 and adjacent bottom sections 104 of housing member 44. Once housing member 44 is formed, tensioning cables 111, 112 are tightened at a series of pre-fabricated recesses 152, 154 at the vertical edges and horizontal edges of panels 105 from inside housing member 44 to provide adequate post-tensioning stress on the formed concrete structure of housing member 44.

Tensioning cables 111, 112 are made from steel or any other suitable reinforcing material, such as, but not limited to, glass fiber, carbon fiber and other cable materials. Tensioning cables 111, 112 are single strand, a bar of reinforcing material, or a plurality of strands of reinforcing material woven, wound, or braided together. Tensioning cables 111, 112 are approximately 3 millimeters (approximately 1/8 inch) to approximately 50 millimeters (approximately 2 inches), more specifically, approximately 3 millimeters (approximately 1/8 inch) to approximately 30 millimeters (approximately 1 inch), or, even more specifically, 3 millimeters (approximately 1/8 inch) to approximately 10 millimeters (approximately 3/8 inch) in thickness, and all subranges therebetween, but may be thinner or thicker depending on the tension required for modular surface foundation element 10 to form modular surface foundation 100. Tensioning cables 111, 112 are part of an unbonded or bonded post-tensioning system. In an unbonded post-tensioning system, tensioning cables 111, 112 are coated with a specially formulated grease and an outer layer of seamless plastic to provide protection against corrosion. In a bonded post-tensioning system, tensioning cables 111, 112 are encased in a corrugated metal or plastic duct, and after the tensioning cables 111, 112 are stressed, a cementitious type grout or epoxy is injected into the duct to bond the tensioning cables 111, 112 to the surrounding concrete.

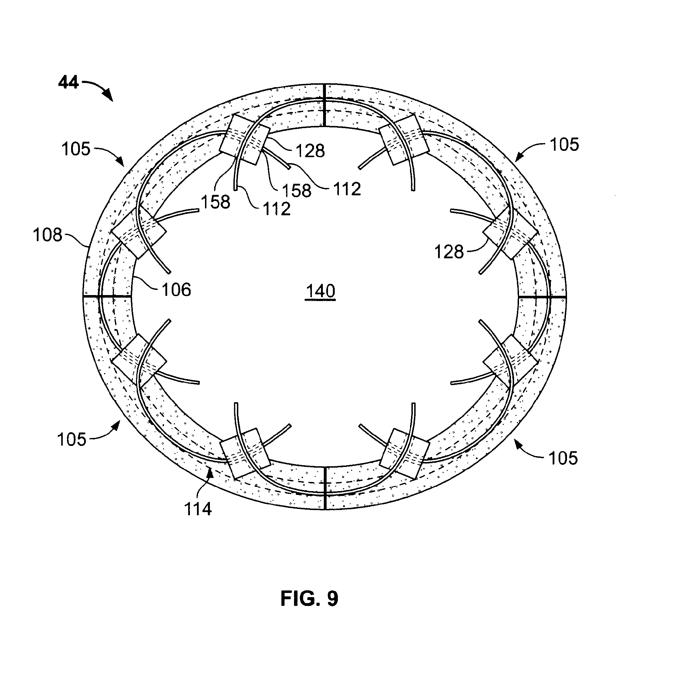

FIG. 8 shows the interior 106 of housing member 44 as an alternative embodiment of the present disclosure. In this embodiment, horizontal tensioning cables 112 are strung through one stub anchor 128 and then run hoop-wise through horizontal through-tubes 114, to an adjacent stub anchor 128 (See FIG. 9) of housing member 44. The process of stringing horizontal tensioning cables 112 is repeated until all of stub anchors 128 in a circular plane are connected hoop-wise, through horizontal through-tubes 114, by horizontal tensioning cables 112. Vertical tensioning cables 111 are strung through one stub anchor 128 and then run height-wise or vertically through vertical through-tubes 110, to the next stub anchor 128 above or below. The process of stringing vertical tensioning cables 111 is repeated until all of the stub anchors 128 in a vertical line are connected through the vertical through-tubes 110 by vertical tensioning cables 111. Stub anchors 128 are concrete structures integrally formed on the interior surface 106 of housing member 44 using a mold having depressions and tubes. Horizontal tensioning cables 112 and vertical tensioning cables 111 are tightened to provide the desired post-tensioning stress to housing member 44. Alternatively, this post-tensioning technique using stubs 128 can be used on external surface 108 of housing member 44 to provide desired post-tensioning stress to housing member 44.

The number of post tensioning cables used, both vertical tensioning cables 111 and horizontal tension cables 112, depends on the turbine size and load. The number of post-tensioning cables used for either of the above described embodiments can also vary depending on the thickness of the post-tensioning cables. In various aspects of the present invention, at least two horizontal tensioning cables 112 are used to provide the desired tension but up to one hundred horizontal tension cables 112 can be used, and more specifically approximately ten to thirty horizontal tensioning cables 112 can be used, depending on housing member 44 height and desired tension. At least three vertical tensioning cables 111 are used in the present invention but up to three hundred vertical tensioning cables 111 can be used, and more specifically, approximately twenty to fifty vertical tensioning cables 111 can be used, depending on housing member 44 height and desired tension. Rebar 122 is also used to provide further reinforcement to housing member 44.

FIG. 9 shows a sectional view of the internal space 140 of a portion of FIG. 8 taken in direction 9-9. FIG. 9 shows the whole interior space 140 according to an embodiment of the present disclosure. In the present embodiment, there are four panels 105 each having two (shown) stub anchors 128. In an alternative embodiment, the number of panel members 105 can be larger or smaller than four, and each panel member 105 contains at least one stub anchor 128. Stub anchors 128 are integrally formed on the inside wall 106 of panels 105 of housing member 44. In one embodiment, horizontal tensioning cables 112 are strung through a channel 158 in stub anchors 128 and threaded through horizontal through-tube 114 to the adjacent stub 128 to join panels 105 and to provide desired post-tensioning once horizontal tensioning cables 112 are tightened. In another alternative embodiment (not shown), the horizontal tensioning cables are strung through a channel in the stub anchor of one panel and strung through horizontal through-tube skipping the adjacent stub anchor and strung through the channel of the next stub anchor located in an adjacent panel. In yet another alternative embodiment (not shown), the horizontal tensioning cables are strung through the channel in the stub anchor of one panel and strung through the horizontal through-tube skipping the stub anchors in the adjacent panel and strung through the channel in the stub anchor of the next adjacent panel. The anchoring at stub 128 utilizes an anchoring end device which typically consists of split tapered clap inserts and anchoring metal blocks with matching tapered holes, which is well known in the art of post-tensioning for concrete structures. The process of stringing horizontal tensioning cables 112 through channels 158 of stub anchor 128 and threading through horizontal through-tube 114 to adjacent stub anchor 128 is repeated until all stub anchors 128 are connected hoop-wise by horizontal tensioning cables 112. Any combination of stringing horizontal tensioning cables 112 through channels 158 of stub anchors 128 and threading through horizontal through-tube 114 to various adjacent and semi-adjacent stub anchors 128 is possible and one or more of the above described methods can be used to provide the desired post-tensioning stress to housing member 44.

Vertical tensioning cables 111 are strung through one stub anchor 128 and then run height-wise or vertically through vertical through-tubes 110, to the next stub anchor 128 above or below (not shown). The process of stringing vertical tensioning cables 111 is repeated until all of the stub anchors 128 in a vertical line are connected through the vertical through-tubes 110 by vertical tensioning cables 111 (not shown).

The present disclosure also provides a method of forming a modular surface foundation 10 for wind turbine space frame towers 30 comprising: fabricating a plurality of housing members 44 having a series of post-tensioning cables 111, 112, forming, by digging or other means, a plurality of shallow trenches 62 to hold footing members 46, placing the footing members 46 in shallow trenches 62, applying the plurality of housing members 44 to the plurality of footing members 46 and securing housing members 44 to footing members 46, applying tension to housing members 44 using the post-tensioning cables 111, 112 wherein the housing member provides support and increased height for the space frame tower and includes an interior space, and attaching structural members 40 of wind turbine space frame tower 30 to housing members 44. Footing member 46 may be pre-fabricated off-site and assembled on site or may be poured into a concrete mold formed within shallow trench 62.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A modular surface foundation for wind turbine space frame towers comprising,
   a plurality of footing members; and
   a housing member disposed on each of the footing members, the housing member extending from the footing member and attaching to one or more structural members forming a portion of a wind turbine tower, wherein the housing member provides support and increased height for the space frame tower and includes an interior space.
2. The modular surface foundation of clause 1, wherein each footing member further comprises a concrete footing disposed in a shallow trench, wherein the trench is substantially shaped like the concrete footing.
3. The modular surface foundation of any preceding clause, wherein the housing member comprises a carbon fiber composite, a reinforced carbon fiber composite, a glass fiber composite, a reinforced glass fiber composite, concrete, reinforced concrete, a metal, or combinations thereof.
4. The modular surface foundation of any preceding clause, wherein the housing member comprises a concrete structure wherein the concrete structure is further supported by rebar and compressed by post-tensioning members.
5. The modular surface foundation of any preceding clause, wherein the concrete structure further comprises a plurality of panels joined together to form the housing member.
6. The modular surface foundation of any preceding clause, wherein the plurality of panels further includes a series of vertical chambers for receiving vertical post-tensioning members.
7. The modular surface foundation of any preceding clause, wherein the plurality of panels further includes a series of horizontal chambers for receiving horizontal post-tensioning members.
8. The modular surface foundation of any preceding clause, wherein each of the plurality of panels further includes a top portion disposed on and mechanically connected to a bottom portion, and wherein the bottom portion is disposed on and mechanically connected to the footing.
9. The modular surface foundation of any preceding clause, wherein both the top portion and the bottom portion further include a series of vertical chambers for receiving vertical post-tensioning members, and a series of horizontal chambers for receiving horizontal post-tensioning members.
10. The modular surface foundation of any preceding clause, wherein a center-to-center dimension of the modular surface foundation is approximately 1.0 to approximately 1.5 times the diameter of the modular surface foundation element.
11. The modular surface foundation of any preceding clause, wherein height of the modular surface element is approximately 1.25 to approximately 1.75 times the diameter of the modular surface element.
12. The modular surface foundation of any preceding clause, wherein the housing member is conical shaped, frusto-conical shaped, triangular pyramid shaped, square pyramid shaped, cylindrical shaped, cube shaped, pentagonal prism shaped, hexagonal prism shaped, heptagonal prism shaped, octagonal prism shaped, nonagonal prism shaped, or decagonal prism shaped.
13. The modular surface foundation of any preceding clause, wherein the interior space holds down tower equipment for the wind turbine.
14. A method of forming a modular surface foundation for wind turbine space frame towers comprising,
   (a) fabricating a plurality of housing members having a series of post-tensioning cables;
   (b) forming a plurality of shallow trenches to hold footing members;
   (c) placing the footing members in the shallow trenches;
   (d) applying the plurality of housing members to the plurality of footing members and securing the housing members to the footing members;
   (e) applying tension to housing members using the post-tensioning cables, wherein the housing member provides support and increased height for the space frame tower and includes an interior space; and
   (f) attaching structural members of wind turbine space frame tower to housing members.
15. The method of any preceding clause, wherein the housing member further comprises one or more selected from the group consisting of a door, a thermal exchange duct, a vent, steps, and combinations thereof.
16. The method of any preceding clause, wherein footing member is pre-fabricated off-site.
17. The method of any preceding clause, wherein the housing member holds down tower equipment.
18. An apparatus having a body closable to form a plurality of panels of a housing member of a modular surface foundation, wherein the body further comprises a top portion containing an aperture for receiving concrete and a bottom portion containing tubes running horizontally and vertically throughout, wherein the formed panels are joined together to form the housing member, wherein the housing member is disposed on a footing member and attached to one or more structural members forming a portion of a wind turbine tower, and wherein the housing member provides support and increased height for a space frame tower and includes an interior space.
19. The apparatus of any preceding clause, wherein the tubes of the bottom portion are removable from the formed panels of the housing member after the concrete has cured.
20. The apparatus of any preceding clause, wherein the bottom portion of the body further includes rebar.

## Claims

1. A modular surface foundation (100) for wind turbine space frame towers (30) comprising,
a plurality of footing members (46); and
a housing member (44) disposed on each of the footing members (46), the housing member (44) extending from the footing member (46) and attaching to one or more structural members (40) forming a portion of a wind turbine tower (30), wherein the housing member (44) provides support and increased height for the space frame tower (30) and includes an interior space (140).

2. The modular surface foundation (100) of claim 1, wherein each footing member (46) further comprises a concrete footing (58) disposed in a shallow trench (62), wherein the trench (62) is substantially shaped like the concrete footing (58).

3. The modular surface foundation (100) of any preceding claim, wherein the housing member (44) comprises a carbon fiber composite, a reinforced carbon fiber composite, a glass fiber composite, a reinforced glass fiber composite, concrete, reinforced concrete, a metal, or combinations thereof.

4. The modular surface foundation (100) of any preceding claim, wherein the housing member (44) comprises a concrete structure wherein the concrete structure is further supported by rebar (122) and compressed by post-tensioning members (111, 112).

5. The modular surface foundation (100) of any preceding claim, wherein a center-to-center dimension of the modular surface foundation (100) is approximately 1.0 to approximately 1.5 times the diameter of the modular surface foundation element (10) and/or the height of the modular surface element (10) is approximately 1.25 to approximately 1.75 times the diameter of the surface element.

6. The modular surface foundation (100) of any preceding claim, wherein the housing member (44) is conical shaped, frusto-conical shaped, triangular pyramid shaped, square pyramid shaped, cylindrical shaped, cube shaped, pentagonal prism shaped, hexagonal prism shaped, heptagonal prism shaped, octagonal prism shaped, nonagonal prism shaped, or decagonal prism shaped.

7. The modular surface foundation (100) of any preceding claim, wherein the interior space (140) holds down tower equipment (56) for the wind turbine (16).

8. A method of forming a modular surface foundation (100) for wind turbine space frame towers (30) comprising,
(a) fabricating a plurality of housing members (44) having a series of post-tensioning cables (111, 112);
(b) forming a plurality of shallow trenches (62) to hold footing members (46);
(c) placing the footing members (46) in the shallow trenches (62);
(d) applying the plurality of housing members (44) to the plurality of footing members (46) and securing the housing members (44) to the footing members (46);
(e) applying tension to housing members (44) using the post-tensioning cables (111, 112), wherein the housing member (44) provides support and increased height for the space frame tower (30) and includes an interior space (140); and
(f) attaching structural members (40) of wind turbine space frame tower (30) to housing members (44).

9. The method of claim 8, wherein the housing member (44) further comprises one or more selected from the group consisting of a door (50), a thermal exchange duct (54), a vent (48), steps (52), and combinations thereof.

10. An apparatus (130) having a body closable to form a plurality of panels (105) of a housing member (44) of a modular surface foundation (100), wherein the body further comprises a top portion (136) containing an aperture (138) for receiving concrete and a bottom portion (132) containing tubes (134) running horizontally and vertically throughout, wherein the formed panels (105) are joined together to form the housing member (44), wherein the housing member (44) is disposed on a footing member (46) and attached to one or more structural members (40) forming a portion of a wind turbine tower (30), and wherein the housing member (44) provides support and increased height for a space frame tower (30) and includes an interior space (140).
